# EUROPEAN PATENT SPECIFICATION

(11) **EP 1 813 479 B1**
(45) Date of publication and mention of the grant of the patent: **22.10.2008**
(21) Application number: 07000608.5
(22) Date of filing: 12.01.2007
(51) Int. Cl.: B60R 16/02, B65D 63/10

(54) **Strap for temporary fixing of parts during handling and assembly on production lines**
Band zur vorübergehenden Fixierung von Teilen während der Handhabung und Montage auf dem Fließband
Pince d'huisseries d'aide à la pose d'huisseries de porte

(30) Priority: 26.01.2006 IT MI20060133
(43) Date of publication of application: 01.08.2007
(73) Proprietor: C.B. S.R.L. Costruzioni Brescianini, 20010 Pogliano MI (IT)
(72) Inventor: Brescianini, Davide, 20154 Milano (IT)
(74) Representative: Alagem Modiano, Lara S.

(56) References cited:
- US-A- 2 466 912
- US-A- 5 632 457
- US-A1- 2005 251 967

## Description

The present invention relates to a strap for temporary fixing of parts during handling and assembly on production lines. More particularly, the invention relates to a so-called handling strap, which can be used to fix parts temporarily during assembly on production lines or also as a permanent strap, thus assuming all the characteristics of a tie.

As is known, wires currently used for example in the automotive field are stored and shipped to the site where they are used by grouping them in bundles, which are retained by using adhesive paper intended to be wrapped around the bundles of wires, so as to constitute a single unit.

However, the use of adhesive paper to group the wires in bundles suffers drawbacks.

First of all, the adhesive paper must be torn subsequently in order to be able to release the several wires, and pieces of adhesive paper inevitably remain on the bottom of the engine compartment of cars in which the wires are arranged.

Moreover, due to the fact that the paper is adhesive, the storage periods of the wires thus grouped by means of strips of adhesive paper must have a very specific duration, since the glue of the adhesive paper can damage the wires. Moreover, the application of strips of adhesive paper to group the several wires entails an operation which requires significant execution times.

Moreover, strips of adhesive paper are used for temporary fixing of parts during handling and assembly on production lines, with the same drawbacks described above.

Document US 2005/251967 shows a strap according to the preamble of claim 1.

The aim of the present invention is to provide a strap which allows to fix parts temporarily during handling and assembly on production lines and allows to adapt to the fixing points where it is applied.

Within this aim, an object of the present invention is to provide a strap which has an inherent elasticity, so as to adapt to the dimensions of items to be fixed.

Another object of the invention is to provide a strap which allows fixing without sliding on bundles of cables, corrugated tubes and the like.

Another object of the present invention is to provide a strap which can be made equally of plastics and/or rubber.

Another object of the present invention is to provide a strap which is highly reliable, relatively simple to provide and at competitive costs.

This aim and these and other objects, which will become better apparent hereinafter, are achieved by a strap for the temporary fixing of parts during handling and assembly on production lines, comprising a ribbon-like element provided with a plurality of slots which are adapted to be engaged by at least one tooth which protrudes from one end of said ribbon-like element, characterized in that it comprises engagement means which are arranged at an opposite end of said ribbon-like element for engagement and disengagement, by traction, of said tooth in/from the respective slot, means for preventing sliding being provided on said ribbon-like element at the face that lies opposite the face on which said protruding tooth is formed.

Further characteristics and advantages of the present invention will become better apparent from the description of a preferred but not exclusive embodiment of the strap according to the present invention, illustrated by way of non-limiting example in the accompanying drawings, wherein:

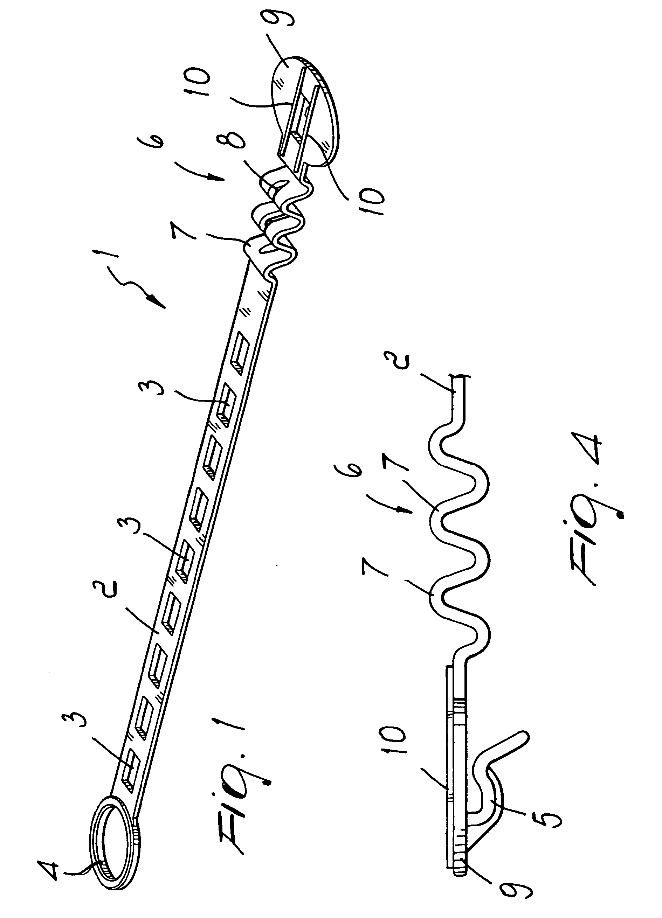

Figure 1 is a perspective view of the strap according to the present invention;

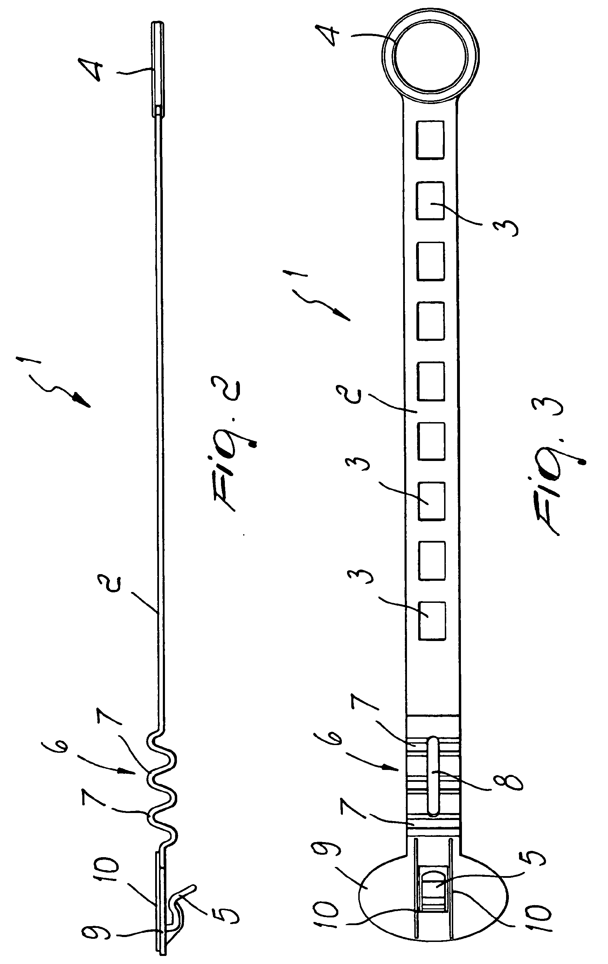

Figure 2 is a side view of the strap according to the present invention;
Figure 3 is a plan view of the strap according to the present invention;
Figure 4 is a longitudinal sectional view of the strap according to the present invention.

With reference to the figures, the strap according to the invention, generally designated by the reference numeral 1, comprises a ribbon-like element 2, which is made for example of plastics and/or rubber and is provided with a plurality slots 3 which are provided longitudinally along the ribbon-like element 2.

The ribbon-like element 2 ends, at one end, with engagement means, for example an annular portion 4. A tooth 5 is formed at the opposite end of the ribbon-like element 2.

Conveniently, at the end of the ribbon-like element 2 in which the tooth 5 is provided, the ribbon-like element is provided with an elastic portion, which allows better adaptability to the dimensions of the items to be fixed and recovery of plays.

This elastic portion, designated by the reference numeral 6, is provided for example by means of an undulated portion 7 made of elastic, flexible material, which accordingly allows the elongation of the ribbon-like element 2 if required by the condition.

Conveniently, the elastic portion 6 can be provided with at least one slot 8 which allows a sort of adjustment of the elastic portion 6.

The portion of the ribbon-like element which supports the fixing tooth 5 is conveniently oval and is designated by the reference numeral 9.

On the face of the oval element 9 which lies opposite the face on which the tooth 5 is provided there are sliding prevention means, which are adapted to prevent the sliding of the ribbon-like element 2 once it has engaged the object to be fixed. Such means are provided for example by at least one rib 10, more preferably two ribs 10 which are arranged for example longitudinally along the axis of the ribbon-like element 2.

The elastic portion 6 can be provided with an undulated shape and be made of plastics, as shown in the figures, or be provided by means of a co-molded flat insert made of rubber.

Both solutions allow in any case to have a portion of the ribbon-like element which is extensible so as to adapt better to the item to be fixed, and also allows to recover any plays.

The presence of the rib or ribs 10 at the oval portion 9 of the strap 1 allows to wind the strap around bundles of cables, corrugated tubes or the like without the drawback of the sliding of said strap on the tubes.

Moreover, the straps can be provided with different colors, so as to identify promptly the intended wire.

The strap according to the invention allows to be engaged around a selected wire, by engaging the engagement tooth 5 in the corresponding slot 3 formed in the ribbon-like element 2; the advantage is that traction of the annular element 4 allows disengagement of the engagement tooth 5 from the corresponding slot 3 in which it is engaged, thus freeing the intended wires, without having to cut the strap by using tools.

In practice it has been found that the strap according to the invention fully achieves the intended aim and objects, since it allows to fasten bundles of wires without the drawback of having to use adhesive paper, with the glue coming into contact with the outer surface of the wires, and especially with difficulties in removing said adhesive paper when one wishes to use the wires.

Moreover, the strap is provided so as to allow its disengagement without having to cut it by means of a tool, to the full advantage not only of removal times but also of the possibility to reuse said strap.

Moreover, the presence of the ribs on the face which lies opposite the one on which the engagement tooth is formed allows to wrap the strap stably and without sliding around a bundle of wires, corrugated tube or the like.

The strap thus conceived is susceptible of numerous modifications and variations, all of which are within the scope of the appended claims.

All the details may further be replaced with other technically equivalent elements, within the scope of the claims.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A strap (1) for the temporary fixing of parts during handling and assembly on production lines, comprising a ribbon-like element (2) provided with a plurality of slots (3) which are adapted to be engaged by at least one tooth (5) which protrudes from one end of said ribbon-like element (2), **characterized in that** it comprises engagement means (4) which are arranged at an opposite end of said ribbon-like element (2) for engagement and disengagement, by traction, of said tooth in/from the respective slot (3), means (10) for preventing sliding being provided on said ribbon-like element (2) at the face that lies opposite the face on which said protruding tooth is formed.

2. The strap according to claim 1, **characterized in that** said ribbon-like element (2) comprises an elastically flexible portion (6).

3. The strap according to claim 2, **characterized in that** it has at least one slot (3) which is formed in said elastically flexible portion (6).

4. The strap according to one or more of the preceding claims, **characterized in that** said elastically flexible portion (6) is constituted by a wave-shaped portion made of plastic material.

5. The strap according to one or more of the preceding claims, **characterized in that** said elastically flexible portion (6) is provided with a co-molded flat insert made of rubber.

6. The strap according to one or more of the preceding claims, **characterized in that** said means for preventing sliding comprise at least one rib (10), which is formed at the face of said ribbon-like element (2) which lies opposite the face on which said protruding tooth (5) is formed.

7. The strap according to claim 6, **characterized in that** said at least one rib (10) is formed in an opposite position with respect to said protruding tooth (5).

## Patentansprüche

1. Ein Band (1) zur vorübergehenden Fixierung von Teilen während der Handhabung und Montage auf Fließbändern, das ein bandartiges Element (2) umfasst, das mit einer Vielzahl von Schlitzen (3) ausgestattet ist, die ausgebildet sind, um von mindestens einem Zahn (5) in Eingriff gebracht zu werden, der aus einem Ende des bandartigen Elements (2) herausragt, **dadurch gekennzeichnet, dass** es Eingriffsmittel (4) umfasst, die an einem gegenüberliegenden Ende des bandartigen Elements (2) angeordnet sind, für den Eingriff und das Loslösen des Zahns in den/aus dem entsprechenden Schlitz (3) durch Zugkraft, wobei Mittel (10), um ein Rutschen zu verhindern, an dem bandartigen Element (2) an der Oberfläche angebracht sind, die gegenüber der Oberfläche liegt, an welcher der vorstehende Zahn gebildet ist.

2. Das Band gemäß Anspruch 1, **dadurch gekennzeichnet, dass** das bandartige Element (2) einen elastisch biegsamen Abschnitt (6) umfasst.

3. Das Band gemäß Anspruch 2, **dadurch gekennzeichnet, dass** es mindestens einen Schlitz (3) hat, welcher in dem elastisch biegsamen Abschnitt (6) gebildet ist.

4. Das Band gemäß einem oder mehreren der obigen Ansprüche, **dadurch gekennzeichnet, dass** der elastisch biegsame Abschnitt (6) aus einem wellenförmigen Abschnitt besteht, der aus Kunststoffmaterial hergestellt ist.

5. Das Band gemäß einem oder mehreren der obigen Ansprüche, **dadurch gekennzeichnet, dass** der elastisch biegsame Abschnitt (6) mit einem mitgeformten flachen Einsatz versehen ist, der aus Gummi besteht.

6. Das Band gemäß einem oder mehreren der obigen Ansprüche, **dadurch gekennzeichnet, dass** die Mittel, um ein Rutschen zu verhindern, mindestens eine Rippe (10) umfassen, die an der Oberfläche des bandartigen Elements (2) gebildet ist, welche gegenüber der Oberfläche liegt, an welcher der vorstehende Zahn (5) gebildet ist.

7. Das Band gemäß Anspruch 6, **dadurch gekennzeichnet, dass** die mindestens eine Rippe (10) in einer gegenüberliegenden Position im Verhältnis zu dem vorstehenden Zahn (5) gebildet ist.

## Revendications

1. Attache (1) pour la fixation temporaire de pièces pendant la manutention et l'assemblage sur des lignes de production, comprenant un élément de type ruban (2) muni d'une pluralité d'encoches (3) qui sont adaptées pour être mises en prise avec au moins une dent (5) qui fait saillie à partir d'une extrémité dudit élément de type ruban (2), **caractérisée en ce qu'**elle comprend des moyens de mise en prise (4) qui sont agencés à une extrémité opposée dudit élément de type ruban (2) pour la mise en prise et hors prise, par traction, de ladite dente dans/depuis l'encoche (3) respective, des moyens (10) pour empêcher le glissement étant prévus sur ledit élément de type ruban (2) sur la face qui est opposée à la face sur laquelle est formée ladite dent en saillie,

2. Attache selon la revendication 1, **caractérisée en ce que** ledit élément de type ruban (2) comprend une portion flexible de façon élastique (6).

3. Attache selon la revendication 2, **caractérisée en ce qu'**elle a au moins une encoche (3) qui est formée dans ladite portion flexible de façon élastique (6).

4. Attache selon une ou plusieurs des revendications précédentes, **caractérisée en ce que** ladite portion flexible de façon élastique (6) est constituée d'une portion de forme ondulée réalisée en matière plastique.

5. Attache selon une ou plusieurs des revendications précédentes, **caractérisée en ce que** ladite portion flexible de façon élastique (6) est munie d'un insert plat co-moulé réalisé en caoutchouc.

6. Attache selon une ou plusieurs des revendications précédentes, **caractérisée en ce que** lesdits moyens pour empêcher le glissement comprennent au moins une nervure (10) qui est formée sur la face dudit élément de type ruban (2) qui est opposée à la face sur laquelle est formée ladite dent (5) en saillie.

7. Attache selon la revendication 6, **caractérisée en ce que** ladite nervure (10), au moins au nombre de un, est formée dans une position opposée par rapport à ladite dent (5) en saillie.
